# FASCICULE DE BREVET EUROPEEN

(11) **EP 1 885 518 B1**
(45) Date de publication et mention de la délivrance du brevet: **28.01.2009**
(21) Numéro de dépôt: 06721910.5
(22) Date de dépôt: 12.04.2006
(51) Int. Cl.: B23B 31/20

(54) **PINCE DE SERRAGE**
FEDERSPIRALROLLE
SPRING COLLET

(30) Priorité: 15.04.2005 CH 6832005; 12.09.2005 CH 14802005
(43) Date de publication de la demande: 13.02.2008
(73) Titulaire: Rollomatic S.A., 2525 Le Landeron (CH)
(72) Inventeur: BÜTSCHI, René, CH-2013 Colombier (CH); PAHUD, Pierre, CH-2900 Porrentruy (CH)
(74) Mandataire: Ganguillet, Cyril
(86) Numéro de dépôt international: PCT/CH2006/000208
(87) Numéro de publication internationale: WO 2006/108315

(56) Documents cités:
- EP-A- 0 007 887
- WO-A-20/04007128
- US-A- 3 076 660
- US-A- 4 809 466

## Description

La présente invention concerne les pinces de serrage et plus particulièrement celles qui sont destinées à la fixation de pièces à usiner en formes de tiges cylindriques, notamment de tiges cylindriques étagées, dans la poupée de machines-outils (voir par exemple WO-A- 2004/007128).

Jusqu'à maintenant, le montage de ces tiges sur la poupée est généralement réalisé avec des pinces de serrage à trois mâchoires reliées à un organe de tirage vers l'arrière qui amène les faces externes tronconiques des mâchoires à être pressées par le cône intérieur du corps de la pince. Avec ces pinces de l'art antérieur, la précision de positionnement axial de la tige n'est que très difficilement atteinte. Ce manque de précision est dû d'une part au nombre important de pièces mises à contribution lors du mouvement de serrage de la pince et à l'usure de ces pièces, notamment du cône du corps de la pince. D'autre part, le fonctionnement de ces pinces étant du type actif, la fermeture des mâchoires entraîne un recul de la tige.

Le but de la présente invention est de proposer une pince de serrage qui permette de remédier aux inconvénients des pinces de serrage de l'art antérieur, de façon à permettre en particulier un positionnement de très grande précision de la pièce à usiner.

A cet effet, la présente invention concerne une pince de serrage, notamment pour la fixation de pièces à usiner en forme de tiges cylindriques, en particulier de tiges cylindriques étagées, dans une poupée d'une machine-outils, caractérisée en ce que son constituant principal est un corps de pince venu d'une seule pièce, ayant un axe longitudinal et un plan de symétrie contenant le dit axe, en ce que ce corps est divisé en deux parties parallèles au dit axe, reliées l'une à l'autre uniquement par une paroi élastiquement déformable, perpendiculaire au plan de symétrie, une des dites parties formant un support rigide et l'autre un élément mobile se déplaçant par flexion de la dite paroi, en ce que chacune des dites parties présente, à une extrémité du corps une portion formant l'une de deux mâchoires opposées, et en ce qu'un organe rapporté est intercalé entre les dites parties du corps, de manière à solliciter l'élément mobile dans une direction qui assure le serrage des mâchoires l'une contre l'autre.

Selon un mode d'exécution, la partie formant support rigide comporte, à son extrémité opposée aux mâchoires, une collerette circulaire centrée sur le dit axe longitudinal, fixant la pince à un organe d'entraînement faisant partie de la poupée, la dite collerette circulaire et la partie du corps formant l'élément mobile pouvant présenter, en regard l'une de l'autre, l'une une nervure et l'autre une gorge dans laquelle la nervure est engagée avec jeu, cette nervure et cette gorge étant perpendiculaires au plan de symétrie et agencées de manière à limiter la flexion de l'élément mobile.

La portion extrême formant la mâchoire dans l'élément mobile du corps de pince peut être reliée au reste du dit élément mobile uniquement par un élément de liaison étroit et déformable, orienté perpendiculairement au plan de symétrie, de manière à permettre un appui non hyperstatique de cette mâchoire contre la pièce à usiner lors du serrage.

La paroi flexible peut présenter deux surfaces latérales réglées concaves ayant des génératrices perpendiculaires au dit plan de symétrie, donnant à la paroi un profil en col de cygne.

Le corps de pince peut être limité latéralement sur une partie de sa longueur par deux surfaces planes parallèles, situées de part et d'autre du plan de symétrie.

La partie du corps formant le support rigide peut présenter, dans le plan de symétrie et sur une partie de sa longueur, une épaisseur dépassant l'axe longitudinal, et être percée selon cet axe et sur cette longueur d'une forure continue débouchant en deçà des mâchoires dans un espace évidé situé devant la paroi flexible, une vis de butée pour le positionnement axial des pièces à usiner entre les mâchoires pouvant être vissée dans l'extrémité de la forure voisine des mâchoires, cette vis étant assurée par un contre-écrou.

L'organe élastique rapporté peut être tenu en place par une vis à portée engagée dans une forure taraudée d'axe parallèle au plan de symétrie, forée dans la partie du corps formant le support rigide, une portée de la dite vis pouvant maintenir l'organe rapporté en appui sur une surface plane de l'élément mobile, la pression de serrage étant réglée par vissage de la vis, un élément de surface cylindrique formant une face extérieure de l'élément mobile du corps de pince pouvant être agencé de manière qu'à l'arrêt de la pince dans une position de dégagement, cet élément de surface soit accessible par un poussoir extérieur permettant de desserrer les mâchoires par flexion élastique de la dite paroi et en comprimant l'organe élastique rapporté.

L'emplacement de la paroi flexible peut se trouver entre celui de l'organe élastique rapporté et l'extrémité du corps pourvue des dites mâchoires, l'élément mobile agissant comme un levier du premier genre pour serrer la pièce à usiner entre les mâchoires sous l'effet de l'organe élastique rapporté ou pour la libérer par un effet de force antagoniste d'un poussoir.

L'organe rapporté peut être un organe élastique.

L'organe rapporté peut également être un élément rigide de dimensions calibrées, engagé entre une partie du corps formant support rigide et une lame de mise en force appartenant à la dite partie mobile, cette lame étant élastiquement déformable et maintenant la dite paroi élastiquement déformable dans une position telle qu'une tige cylindrique engagée entre les dites mâchoires est pressée par ces dernières avec une force prédéterminée.

On décrit ci-après, à titre d'exemples non limitatifs, deux formes d'exécution de la pince selon l'invention représentées sur le dessin annexé où :
- la fig. 1 est une vue en coupe selon le plan de symétrie de la pince selon la première forme d'exécution,
- la fig. 2 est une vue en perspective oblique, à plus petite échelle, et
- la fig. 3 est une vue en coupe partielle d'une poupée de machine-outil avec la pince selon la première forme d'exécution dans une position de fonctionnement particulière, et
- la fig. 4 est une vue en coupe analogue à la fig. 1 et selon le plan de symétrie, de la seconde forme d'exécution de la pince.

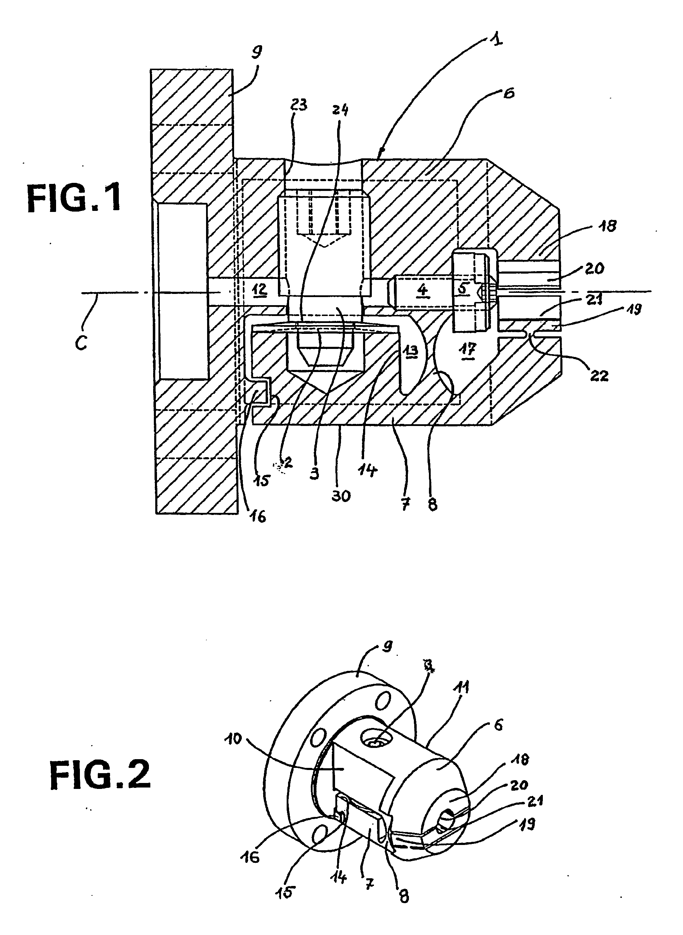

Les éléments constitutifs de la pince de serrage représentée à la fig. 1 sont un corps de pince 1, un organe élastique rapporté 2, une vis 3 de fixation de l'organe rapporté 2, une vis 4 de butée axiale et un contre-écrou 5 bloquant la vis 4. Le corps 1 est une pièce de forme générale cylindrique avec une extrémité tronconique et dans laquelle deux zones intérieures 13 et 17 ont été usinées par électroérosion. Cette pièce est ainsi divisée en deux parties dont la partie supérieure à la fig. 1 forme un support rigide 6 et la partie inférieure un élément mobile 7 qui n'est relié au support rigide 6 que par un élément de liaison déformable en forme de col de cygne 8.

A la fig. 1, l'extrémité gauche du corps 1 forme une collerette circulaire massive 9 solidaire du support 6. Comme le montre la fig. 2 les faces extérieures du corps 1 comportent deux faces planes 10 et 11 qui sont parallèles et situées symétriquement de part et d'autre du plan de symétrie de la pièce, confondu à la fig. 1 avec le plan du dessin. Ces faces 10 et 11 seront usinées de préférence par fraisage. L'une des zones évidées par électroérosion dans le corps 1, soit la zone 13 est entièrement située en dessous de l'axe central longitudinal C de la pièce, qui passe au centre de la collerette 9. Ainsi une forure axiale 12 traversant entièrement le corps 1 se trouve entièrement dans la partie 6 formant le support rigide.

La zone 13 évidée par électroérosion, crée un espace libre de faible épaisseur, s'étendant entre les éléments rigide 6 et mobile 7, entre les faces parallèles 10 et 11. Elle délimite sur l'élément mobile 7 une table d'appui 14 située entre la paroi 8 et la collerette 9 avec dans sa partie arrière une gorge 15 perpendiculaire au plan de symétrie de la pièce et correspondant à une nervure 16 qui se trouve solidaire de la collerette 9 et engagée dans la gorge 15.

La seconde zone évidée 17 forme à l'avant du corps 1 un espace libre qui, comme l'espace 13, est ouvert latéralement entre les faces planes 10 et 11. Elle délimite aussi bien dans le support rigide 6 que dans l'élément mobile 7, les faces arrière d'une mâchoire fixe 18 et d'une mâchoire mobile 19. Les faces internes 20 et 21 de ces mâchoires sont du type Vé et plat, réalisés dans la mâchoire fixe sous la forme de deux secteurs de cercle et dans la mâchoire mobile sous la forme d'un secteur de cercle comme cela ressort de la fig. 2. Ces trois secteurs de cercle peuvent être réalisés par usinage d'un trou dans la partie d'extrémité du corps de pince, les deux secteurs de cercle remplaçant les parois du Vé étant séparés par une rainure remplaçant la pointe du Vé.

On notera encore que l'espace 17 se prolonge sous la mâchoire 19 (voir fig. 1) par une gorge profonde et mince à laquelle correspond une gorge semblable usinée depuis l'extérieur, le tout de manière à créer, entre la mâchoire 19 et la partie massive de l'élément mobile 7, un élément de liaison déformable 22 en forme de col de cygne.

Outre le corps 1, la pince comporte la vis à portée 3, engagée dans une forure taraudée 23 formée à travers le support rigide 6 dans le plan de symétrie et perpendiculairement à l'axe de la pièce. Cette vis traverse la forure 12 et se prolonge dans la partie de l'élément mobile 7 qui forme la table 14. Son épaulement 24 appuie sur le bord intérieur de l'organe élastique 2. Celui-ci est une rondelle conique dont le bord extérieur est en appui sur la face supérieure de la table 14. La pression de serrage est réglée par vissage de la vis 3.

Enfin, on voit que la vis de butée 4 est engagée dans un taraudage de l'extrémité côté mâchoires de la forure 12 et bloquée par le contre-écrou 5 qui, lors du montage, peut être présenté par engagement latéral dans l'espace 17. Une fois la vis 4 vissée dans la forure 12 dans une position telle que sa face antérieure bombée fonctionne comme butée axiale pour les pièces à usiner engagées entre les mâchoires, le contre-écrou 5 pourra être vissé à son tour à travers l'espace entre les mâchoires.

Le profil de la paroi flexible 8 est donné par la forme des deux faces extrêmes des espaces 13 et 17. Son allure en col de cygne lui donne une bonne flexibilité. L'élément mobile 7 agit comme un levier du premier genre pivotant sur la paroi 8, sollicité par la rondelle 2 et pressant la pièce (non représentée sur le dessin) insérée entre les mâchoires 18 et 19, contre le support rigide 6. La mâchoire 19 conformée avec une surface plane 21 à sa base va diriger la pièce à usiner dans une position rigoureusement parallèle à l'axe de la forure 12 grâce à la possibilité de déformation du filet 22. Cette disposition évite toute contrainte hyperstatique dans le positionnement de la pièce. Pour le dégagement de la pièce insérée entre les mâchoires, il suffit d'appuyer au moyen d'un poussoir extérieur contre la portion de surface cylindrique 30 qui limite l'élément mobile 7 entre les faces 10 et 11.

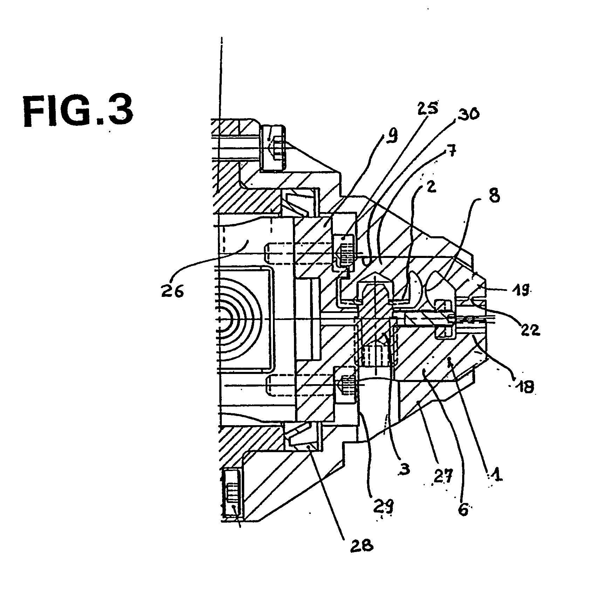

La fig. 3 montre la pince des fig. 1 et 2 montée dans une poupée d'une machine transfert. Le corps de pince 1 est fixé par l'intermédiaire de boulons 25 engagés dans des ouvertures de la collerette 9, à un élément d'entraînement 26 qu'il n'est pas nécessaire de décrire et qui fait partie de la poupée. Extérieurement celle-ci comporte un capot 27 fixe qui entoure le corps de pince 1 et maintient un joint 28 s'appuyant sur le pourtour de la collerette 9. La fig. 3 montre la position dans laquelle la pince de serrage est arrêtée lorsqu'il s'agit de régler la force d'appui de la rondelle élastique 2 sur la surface périphérique d'une pièce à usiner. La vis à portée 3 est accessible par une ouverture 29 dans le capot 27. Pour les opérations de déchargement de l'outil terminé et de rechargement d'une nouvelle ébauche, la poupée sera arrêtée dans une position à 180 degrés de celle de la fig. 3. Au moyen d'un poussoir engagé dans l'ouverture 29 il sera possible de presser sur la portion de surface cylindrique 30 de l'élément mobile 7 du corps de pince 1 de façon à desserrer la mâchoire 19. On voit que toutes ces opérations peuvent être effectuées par commandes automatiques en fonctions de programmes incorporés à la machine.

Les avantages remarquables de la construction décrite sont premièrement que la fixation de la pièce à usiner est obtenue par serrage passif. C'est l'élasticité de la rondelle 2 qui donne la force de serrage, indépendamment de tout autre dispositif extérieur. Deuxièmement, la position axiale de la pièce à usiner est déterminée exactement par le système de vis de butée 4 et contre-écrou 5. Dans les systèmes de serrage usuels avec trois mâchoires, cette précision de positionnement axial n'est que très difficilement atteinte. De plus, la force de serrage est donnée par le pivotement d'amplitude très faible de l'élément mobile 7. Du fait de la construction décrite cette force s'exerce dans une direction parfaitement radiale et assure un appui stable des mâchoires sur l'outil grâce au fait que ces mâchoires sont du type Vé et plat. Enfin, du fait de la réalisation du corps de pince venu d'une seule pièce, il n'y a pas de problème d'usure.

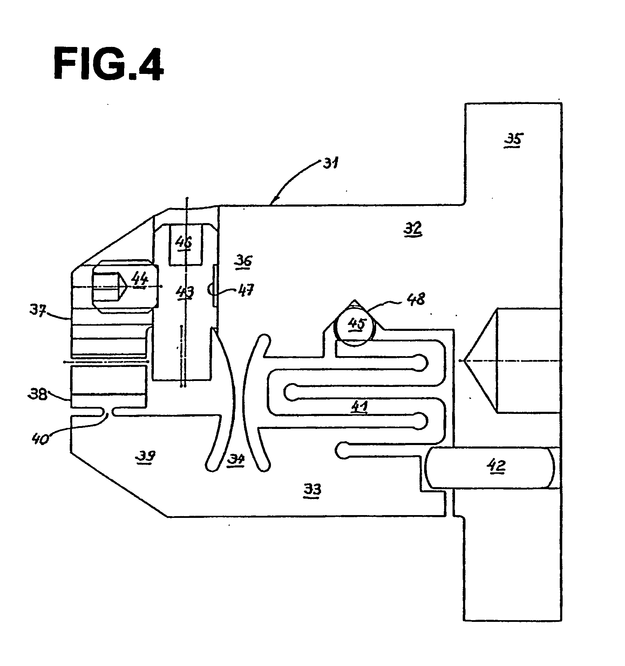

Dans la seconde forme d'exécution représentée à la fig. 4, on retrouve comme élément de structure principal un corps en une pièce 31, de forme générale cylindrique, divisé par des opérations d'électroérosion en deux parties 32 et 33 reliées l'une à l'autre uniquement par un élément de liaison en forme de paroi flexible 34 à profil en col de cygne. La partie 32 est un élément fixe de la pince, qui comporte une collerette circulaire 35 de fixation analogue à la collerette 9, un prolongement rigide 36 usiné extérieurement par des moyens conventionnels et se terminant par une portion de mâchoire fixe 37 semblable à la portion 18 de la fig. 1. Comme dans la première forme d'exécution, le corps 31 est limité latéralement par deux faces planes parallèles au plan de symétrie et disposées de part et d'autre de ce dernier.

L'élément mobile 33 comporte d'abord en regard de la portion de mâchoire 37 une portion 38 de mâchoire mobile, ensuite une zone de liaison 39 rattachant la portion 38 à la paroi flexible 34, avec interposition d'un filet flexible 40 jouant le même rôle que l'élément 22, et enfin une zone de mise en tension 41 ayant la forme d'une lame plane, repliée sur elle-même en zigzag et se terminant en regard de la face interne de la partie rigide 36. Toutes ces parties sont délimitées par des surfaces réglées à génératrices perpendiculaires au plan de symétrie, obtenues par électroérosion.

Pour la compléter et permettre son utilisation précise comme pince, la pièce 31 est associée à quatre éléments rapportés 42, 43, 44, 45. L'élément 42 est une goupille cylindrique chassée dans un perçage dans la collerette 35. On voit qu'elle entre dans un espace ménagé dans l'élément mobile 33 de manière à limiter le déplacement vertical de cet élément. Cette goupille joue donc le même rôle que la nervure 16 de la fig. 1. L'élément 43 est une goupille à extrémité excentrée avec une portion supérieure tournée à un diamètre qui permet son coulissement dans un alésage foré dans l'élément 36, dans le plan de symétrie de la pièce 31 et perpendiculairement à l'axe de cette pièce, et avec une portion inférieure également cylindrique mais ayant un diamètre légèrement plus faible, décalée de manière qu'une génératrice de la goupille soit une génératrice continue du haut en bas. Un logement 46 à profil carré formé dans la partie supérieure de la goupille 43 permet de la mouvoir en rotation dans son alésage et une gorge 47 permet de fixer sa position en hauteur par l'intermédiaire de l'élément 44 qui est une vis sans tête engagée dans un taraudage parallèle à l'axe de la pince, l'extrémité de cette vis pénétrant dans la gorge 47. La goupille excentrée 43 permet d'ajuster à volonté et avec précision la profondeur d'engagement des tiges à usiner dans la pince, comme pour la vis 4 de la première forme d'exécution. Enfin, l'élément 45 est une goupille cylindrique avec une tête élargie, qui est engagée latéralement lors de la mise en place d'une tige à pincer, entre les flancs d'une gorge en Vé 48 ménagée dans la partie rigide 32 et le dernier segment rectiligne de la lame en zigzag 41 de la portion flexible 33. On voit que la pression de serrage peut être facilement ajustée à la valeur voulue par le choix d'une goupille 45 ayant un diamètre convenable.

On a ainsi fait apparaître les avantages principaux des formes d'exécution préférées de l'objet de l'invention.

Tous ces avantages font que la pince selon l'invention est particulièrement indiquée pour l'usinage de tiges de forets ou de mèches de perçage de petits diamètres qui s'effectue couramment sur des machines transfert à table rotative à plusieurs stations. Dans ces machines, chaque ébauche d'outil doit être montée dans la poupée de la table rotative, déplacée dans les différentes stations, avec entraînement éventuel en rotation, après quoi l'outil fini doit être déchargé. Outre la très grande précision de positionnement de l'outil, la pince selon l'invention contribue de façon importante à l'automatisation des opérations de chargement et de déchargement de l'outil intervenant dans de telles machines de transfert.

## Revendications

1. Pince de serrage, notamment pour la fixation de pièces à usiner en forme de tiges cylindriques, en particulier de tiges cylindriques étagées, dans une poupée d'une machine-outils, **caractérisée en ce que** son constituant principal est un corps de pince (1) venu d'une seule pièce, ayant un axe longitudinal (C) et un plan de symétrie contenant le dit axe, **en ce que** ce corps est divisé en deux parties (6, 7) parallèles au dit axe, reliées l'une à l'autre uniquement par une paroi (8) élastiquement déformable, perpendiculaire au plan de symétrie, une des dites parties formant un support rigide (6) et l'autre un élément mobile (7) se déplaçant par flexion de la dite paroi (8), **en ce que** chacune des dites parties présente, à une extrémité du corps, une portion (18, 19) formant l'une de deux mâchoires opposées, et **en ce qu'**un organe (2; 45) rapporté est intercalé entre les dites parties du corps, de manière à solliciter l'élément mobile (7) dans une direction qui assure le serrage des mâchoires l'une contre l'autre.

2. Pince selon la revendication 1, **caractérisée en ce que** la partie formant support rigide (6) comporte, à son extrémité opposée aux mâchoires (18, 19), une collerette (9) circulaire centrée sur le dit axe longitudinal, fixant la pince à un organe d'entraînement (26) faisant partie de la poupée.

3. Pince selon la revendication 2, **caractérisée en ce que** la dite collerette circulaire (9) et la partie du corps formant l'élément mobile (7) présentent, en regard l'une de l'autre, l'une une nervure (16) et l'autre une gorge (15) dans laquelle la nervure est engagée avec jeu, cette nervure et cette gorge étant perpendiculaires au plan de symétrie et agencées de manière à limiter la flexion de l'élément mobile (7).

4. Pince selon la revendication 1, **caractérisée en ce que** la portion extrême (19) formant la mâchoire dans l'élément mobile (7) du corps de pince est reliée au reste du dit élément mobile uniquement par un élément de liaison étroit et déformable (22), orienté perpendiculairement au plan de symétrie, de manière à permettre un appui non hyperstatique de cette mâchoire contre la pièce à usiner lors du serrage.

5. Pince de serrage selon la revendication 1, **caractérisée en ce que** la dite paroi flexible (8) présente deux surfaces latérales réglées concaves ayant des génératrices perpendiculaires au dit plan de symétrie, donnant à la paroi un profil en col de cygne.

6. Pince de serrage selon la revendication 1, **caractérisée en ce que** le corps de pince (1) est limité latéralement sur une partie de sa longueur par deux surfaces planes parallèles (10, 11), situées de part et d'autre du plan de symétrie.

7. Pince de serrage selon la revendication 1, **caractérisée en ce que** la partie du corps formant le support rigide (6) présente, dans le plan de symétrie et sur une partie de sa longueur, une épaisseur dépassant l'axe longitudinal, et est percée selon cet axe et sur cette longueur d'une forure (12) continue débouchant en deçà des mâchoires (18, 19) dans un espace évidé (17) situé devant la paroi flexible (8).

8. Pince de serrage selon la revendication 7, **caractérisée en ce qu'**une vis de butée (5) pour le positionnement axial des pièces à usiner entre les mâchoires (18, 19) est vissée dans l'extrémité de la forure (12) voisine des mâchoires, cette vis étant assurée par un contre-écrou (5).

9. Pince de serrage selon la revendication 1, **caractérisée en ce que** le dit organe élastique (2) rapporté est tenu en place par une vis à portée (3) engagée dans une forure taraudée (23) d'axe parallèle au plan de symétrie, forée dans la partie du corps (1) formant le support rigide (6), et **en ce qu'**une portée (24) de la dite vis maintient l'organe rapporté (2) en appui sur une surface plane de l'élément mobile (7), la pression de serrage étant réglée par vissage de la vis (3).

10. Pince de serrage selon la revendication 9, **caractérisée en ce qu'**un élément de surface cylindrique (30) formant une face extérieure de l'élément mobile (7) du corps de pince est agencé de manière qu'à l'arrêt de la pince dans une position de dégagement, cet élément de surface soit accessible par un poussoir extérieur permettant de desserrer les mâchoires (18, 19) par flexion élastique de la dite paroi (8) et en comprimant l'organe élastique rapporté (2).

11. Pince de serrage selon la revendication 1, **caractérisée en ce que** l'emplacement de la dite paroi flexible (8) se trouve entre celui de l'organe élastique rapporté (2) et l'extrémité du corps pourvue des dites mâchoires (18, 19), l'élément mobile (7) agissant comme un levier du premier genre pour serrer la pièce à usiner entre les mâchoires (18, 19) sous l'effet de l'organe élastique rapporté (2) ou pour la libérer par un effet de force antagoniste d'un poussoir.

12. Pince selon la revendication 1, **caractérisée en ce que** le dit organe rapporté est un organe élastique (2).

13. Pince selon la revendication 1, **caractérisée en ce que** le dit organe rapporté est un élément rigide (45) de dimensions calibrées, engagé entre une partie (32) du corps (31) formant support rigide et une lame de mise en force (41) appartenant à la dite partie mobile (33), cette lame étant élastiquement déformable et maintenant la dite paroi élastiquement déformable (34) dans une position telle qu'une tige cylindrique engagée entre les dites mâchoires est pressée par ces dernières avec une force prédéterminée.

## Claims

1. A clamping collet, in particular for fastening workpieces in the form of cylindrical rods, in particular stepped rods, into a workhead of a machine tool, said clamping collet being **characterized in that** its main component part is a collet body (1) formed in one piece, having a longitudinal axis (C) and a plane of symmetry containing said axis, **in that** said body is subdivided into two portions (6, 7) that are parallel to said axis, and that are connected together solely via an elastically deformable wall (8) perpendicular to the plane of symmetry, one of said portions forming a rigid support (6) and the other forming a moving element (7) that moves by means of said wall (8) bending, **in that** each of said portions has, at one end of the body, a segment (18, 19) that forms one of two opposite jaws, and **in that** a separate member (2; 45) is interposed between said portions of the body, so as to urge the moving element (7) to move in a direction that causes the jaws to be clamped together.

2. A collet according to claim 1, **characterized in that** the portion forming the rigid support (6) has, at its end opposite from the jaws (18, 19), a circular collar (9) that is centered on said longitudinal axis, and that fastens the collet to a drive member (26) that is part of the workhead.

3. A collet according to claim 2, **characterized in that** said circular collar (9) and that portion of the body which forms the moving element (7) have the following facing each other: one has a rib (16) and the other has a groove (15) into which the rib is engaged with clearance, said rib and said groove being perpendicular to the plane of symmetry and being arranged so as to limit the extent to which the moving element (7) can bend.

4. A collet according to claim 1, **characterized in that** the end portion (19) that forms the jaw in the moving element (7) of the collet body is connected to the remainder of said moving element solely via a narrow and deformable link element (22) that extends perpendicularly to the plane of symmetry, so as to enable the jaw to bear in statically non-redundant manner against the workpiece during clamping.

5. A collet according to claim 1, **characterized in that** said flexible wall (8) has two concave ruled side surfaces having generator lines that are perpendicular to said plane of symmetry, thereby imparting a swan-neck shaped profile to the wall.

6. A collet according to claim 1, **characterized in that** the collet body (1) is delimited laterally over a portion of its length by two parallel plane surfaces (10, 11), situated on either side of the plane of symmetry.

7. A collet according to claim 1, **characterized in that that** portion of the body which forms the rigid support (6) presents, in the plane of symmetry, and over a portion of its length, a thickness extending beyond the longitudinal axis, and is provided on said axis and over said length, with a continuous bore (12) opening out beyond the jaws (18, 19) in a recessed space (17) situated in front of the flexible wall (8).

8. A collet according to claim 7, **characterized in that** an abutment screw (5) for axially positioning the workpieces between the jaws (18, 19) is screwed into the end of the bore (12) adjacent to the jaws, said screw being secured by a locknut (5).

9. A collet according to claim 1, **characterized in that** said separate resilient member (2) is held in place by a bearing screw (3) engaged in a tapped bore (23) of axis parallel to the plane of symmetry, bored **in that** portion of the body (1) which forms the rigid support (6), and **in that** a bearing (24) of said screw holds the separate member (2) in abutment against a plane surface of the moving element (7), the clamping pressure being adjusted when screwing the screw (3).

10. A collet according to claim 9, **characterized in that** a cylindrical surface element (30) forming an outside face of the moving element (7) of the collet is arranged so that, when the collet is stationary in a disengagement position, said surface element is accessible via an external pusher making it possible to loosen the jaws (18, 19) by said wall (8) bending elastically and by the separate resilient member (2) being compressed.

11. A collet according to claim 1, **characterized in that** the location of said flexible wall (8) is situated between the location of the separate resilient member (2) and that end of the body which is provided with said jaws (18, 19), the moving element (7) acting as a lever of the first kind for clamping the workpiece between the jaws (18, 19) under the effect of the separate resilient member (2), or for releasing it by an opposing force effect from a pusher.

12. A collet according to claim 1, **characterized in that** said separate member is an elastic member (2).

13. A collet according to claim 1, **characterized in that** said separate member is a rigid element (45) of calibrated dimensions, engaged between a portion (32) of the body (31) that forms a rigid support and a force-applying blade (41) belonging to said moving portion (33), said blade being elastically deformable and holding said elastically deformable wall (34) in a position such that a cylindrical rod engaged between said jaws is pressed by said jaws with a predetermined force.

## Patentansprüche

1. Spannzange, insbesondere zur Befestigung von Werkstücken in Form zylindrischer Stäbe, insbesondere gestufter zylindrischer Stäbe, in einem Spindelstock einer Werkzeugmaschine, **dadurch gekennzeichnet, dass** ihr Hauptbestandteil ein aus einem einzigen Teil gefertigter Zangenkörper (1) ist, der eine Längsachse (C) und eine Symmetrieebene aufweist, die diese Achse enthält, dass dieser Körper in zwei Teile (6, 7) unterteilt ist, die parallel zu der Achse sind, nur durch eine elastisch verformbare Wand (8) miteinander verbunden sind, die senkrecht zur Symmetrieebene ist, wobei einer der Teile eine starre Auflage (6) und der andere ein bewegliches Element (7) bildet, das sich durch die Biegung der Wand (8) bewegt, dass jeder der Teile an einem Ende des Körpers einen Abschnitt (18, 19) umfasst, der eine der einander gegenüberliegenden Backen bildet, und dass ein angesetztes Organ (2; 45) zwischen den Teilen des Körpers derart angeordnet ist, dass das bewegliche Element (7) in einer Richtung beansprucht wird, die gewährleistet, dass die Backen zueinandergedrückt werden.

2. Zange nach Anspruch 1, **dadurch gekennzeichnet, dass** der Teil, der die starre Auflage (6) bildet, an seinem den Backen (18, 19) entgegengesetzten Ende einen kreisförmigen Flansch (9) umfasst, der auf die Längsachse zentriert ist und die Zange an einem Antriebsorgan (26) fixiert, das Teil des Spindelstocks ist.

3. Zange nach Anspruch 2, **dadurch gekennzeichnet, dass** der kreisförmige Flansch (9) und der Teil des Körpers, der das bewegliche Element (7) bildet, einander gegenüberliegend eine Rippe (16) bzw. eine Nut (15) aufweisen, in die die Rippe mit Spiel eingefügt ist, wobei diese Rippe und diese Nut senkrecht zur Symmetrieebene sind und derart angeordnet sind, dass die Biegung des beweglichen Elements (7) begrenzt wird.

4. Zange nach Anspruch 1, **dadurch gekennzeichnet, dass** der äußere Abschnitt (19), der die Backe in dem beweglichen Element (7) des Zangenkörpers bildet, mit dem Rest des beweglichen Elements einzig durch ein schmales und verformbares Verbindungselement (22) verbunden ist, das senkrecht zur Symmetrieebene ausgerichtet ist, so dass beim Einspannen eine nicht statisch überbestimmte Auflage dieser Backe am Werkstück ermöglicht wird.

5. Spannzange nach Anspruch 1, **dadurch gekennzeichnet, dass** die biegsame Wand (8) zwei konkave seitliche Regelflächen umfasst, die Erzeugende aufweisen, die senkrecht zur Symmetrieebene sind, was der Wand ein Schwanenhalsprofil verleiht.

6. Spannzange nach Anspruch 1, **dadurch gekennzeichnet, dass** der Zangenkörper (1) seitlich über einen Teil seiner Länge durch zwei parallele ebene Flächen (10, 11) begrenzt ist, die zu beiden Seiten der Symmetrieebene angeordnet sind.

7. Spannzange nach Anspruch 1, **dadurch gekennzeichnet, dass** der Teil des Körpers, der die starre Auflage (6) bildet, in der Symmetrieebene und über einen Teil seiner Länge eine Dicke aufweist, die über die Längsachse hinausragt, und entlang dieser Achse und über diese Länge mit einer durchgehenden Bohrung (12) versehen ist, die diesseits der Backen (18, 19) in einem ausgebohrten Raum (17) mündet, der vor der biegsamen Wand (8) angeordnet ist.

8. Spannzange nach Anspruch 7, **dadurch gekennzeichnet, dass** eine Anschlagschraube (5) zur axialen Positionierung der Werkstücke zwischen den Backen (18, 19) in der Nähe der Backen in das Ende der Bohrung (12) geschraubt ist, wobei diese Schraube durch eine Gegenmutter (5) gesichert ist.

9. Spannzange nach Anspruch 1, **dadurch gekennzeichnet, dass** das angesetzte elastische Organ (2) durch eine Ansatzschraube (3) an seinem Platz gehalten wird, die in eine Gewindebohrung (23) eingefügt ist, deren Achse parallel zur Symmetrieebene ist und die in den Teil des Körpers (1) gebohrt ist, der die starre Auflage (6) bildet, und dass eine Auflagefläche (24) der Schraube das angesetzte Organ (2) gegen eine ebene Fläche des beweglichen Organs (7) drückt, wobei der Anpressdruck durch die Verschraubung der Schraube (3) eingestellt wird.

10. Spannzange nach Anspruch 9, **dadurch gekennzeichnet, dass** ein zylindrisches Oberflächenelement (30), das eine Außenseite des beweglichen Elements (7) des Zangenkörpers bildet, so ausgebildet ist, dass beim Stillstand der Zange in einer Freigabeposition dieses Oberflächenelement für eine externe Druckvorrichtung zugänglich ist, die es ermöglicht, die Backen (18, 19) durch elastische Biegung der Wand (8) und durch Zusammendrücken des angesetzten elastischen Elements (2) zu lösen.

11. Spannzange nach Anspruch 1, **dadurch gekennzeichnet, dass** sich die Einbaustelle der biegsamen Wand (8) zwischen dem angesetzten elastischen Element (2) und dem Ende des Körpers befindet, das mit den Backen (18, 19) versehen ist, wobei das bewegliche Element (7) als Hebel der ersten Art agiert, um das Werkstück unter der Einwirkung des angesetzten elastischen Organs (2) zwischen den Backen (18, 19) einzuspannen oder um es durch die Gegenkraftwirkung eines Druckelements freizugeben.

12. Zange nach Anspruch 1, **dadurch gekennzeichnet, dass** das angesetzte Organ ein elastisches Organ (2) ist.

13. Zange nach Anspruch 1, **dadurch gekennzeichnet, dass** das angesetzte Organ ein starres Element (45) mit kalibrierten Abmessungen ist, das zwischen einem Teil (32) des Körpers (31), der die starre Auflage bildet, und einem Spannblatt (41), das zum beweglichen Teil (33) gehört, eingefügt ist, wobei dieses Blatt elastisch verformbar ist und die elastisch verformbare Wand (34) in einer solchen Position hält, dass ein zylindrischer Stab, der zwischen die Backen eingefügt wird, durch die Letztgenannten mit einer vorbestimmten Kraft gedrückt wird.
